(19) Europäisches Patentamt
European Patent Office
Office européen des brevets

(11) **EP 2 752 345 B1**

(12) **EUROPÄISCHE PATENTSCHRIFT**

(45) Veröffentlichungstag und Bekanntmachung des Hinweises auf die Patenterteilung:
**27.04.2016 Patentblatt 2016/17**

(51) Int Cl.:
**B60W 20/00** *(2016.01)* **B60W 30/18** *(2012.01)*
**B60W 10/06** *(2006.01)* **B60W 10/08** *(2006.01)*
**B60K 6/48** *(2007.10)*

(21) Anmeldenummer: **13198716.6**

(22) Anmeldetag: **20.12.2013**

(54) **Vorrichtung und Verfahren zum schlupffreien Übertragen eines maximalen Antriebsmoments**

Device and method for transferring a maximum drive torque without slip

Dispositif et procédé de transmission sans patinage d'un couple moteur maximal

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.01.2013 DE 102013000379**

(43) Veröffentlichungstag der Anmeldung:
**09.07.2014 Patentblatt 2014/28**

(73) Patentinhaber: **GETRAG Getriebe- und Zahnradfabrik**
**Hermann Hagenmeyer GmbH & Cie KG**
**74199 Untergruppenbach (DE)**

(72) Erfinder: **Hoffmeister, Thomas**
**70825 Korntal-Münchingen (DE)**

(74) Vertreter: **Witte, Weller & Partner Patentanwälte mbB**
**Postfach 10 54 62**
**70047 Stuttgart (DE)**

(56) Entgegenhaltungen:
**EP-A2- 2 110 289       DE-A1-102006 045 824**
**DE-A1-102010 006 305   US-A1- 2009 240 416**

## Beschreibung

Die vorliegende Erfindung betrifft eine Vorrichtung und ein Verfahren zum Regeln eines hybridisierten Antriebsstrangs eines Kraftfahrzeugs auf ein, vorzugsweise maximal übertragbares, Zielmoment, wobei der Antriebsstrang aufweist: ein automatisiertes Stufengetriebe mit einer Eingangswelle und einer Ausgangswelle, wobei die Ausgangswelle mit mindestens einem Antriebsrad des Kraftfahrzeugs verbunden ist; einen Verbrennungsmotor zum Erzeugen eines Antriebsmoments; eine Trennkupplung, die den Verbrennungsmotor lösbar zur Übertragung des Antriebsmoments an das Stufengetriebe koppelt; eine Elektromaschine zur Erzeugung eines Zusatzmoments, das zusätzlich zum Antriebsmoment an die Antriebsräder koppelbar ist; eine Motorsteuerung, die das Antriebsmoment des Verbrennungsmotors regelt; eine Elektromaschinensteuerung zur Regelung des Zusatzmoments; mindestens einen Sensor zur Erfassung einer Größe, aus der ein tatsächlich von der Ausgangswelle an die Antriebsräder übertragenes Ausgangsmoment ermittelbar ist, wobei die Elektromaschinensteuerung das Zusatzmoment als Funktion eines ermittelten Ausgangsmoments regelt; und eine Steuerung, die angepasst ist, das übertragene Ausgangsmoment mittels Berechnung aus der erfassten Größe zu ermitteln. Die vorliegende Erfindung ist insbesondere zur Durchführung eines sogenannten Rennstarts einsetzbar.

Bei einem Rennstart wird eine durch einen Verbrennungsmotor generierte Leistung an das oder die Antriebsräder geleitet, wobei ein Antriebsmoment auf eine maximal mögliche Haftung der Antriebsräder geregelt wird. Bei einem Rennstart wird ein maximales Drehmoment auf die Antriebsräder übertragen, ohne dass es zu Schlupf kommt. Unter Schlupf versteht man nachfolgend eine Abweichung von Geschwindigkeiten von miteinander in Reibkontakt stehenden mechanischen Elementen oder Fluiden unter tangentialer Belastung. Ohne einen Formschluss ist der Schlupf die Voraussetzung für einen Energieübertrag. Bei angetriebenen Rädern ist der Schlupf das Verhältnis einer Drehzahl eines angetriebenen Rads zu einer Drehzahl eines nicht angetriebenen Rads. Sobald Antriebs- oder Bremskräfte auf das Rad übertragen werden, stellt sich ein geringer, von Null verschiedener Schlupfwert ein. Dieser hängt von der Geschwindigkeit und den übertragenen Kräften ab. Wird das Rad so stark beschleunigt oder gebremst, dass die maximale Haftreibungskraft überschritten wird, wächst der Schlupf, bis es zu einem unkontrollierten Durchdrehen (Schleudern) bzw. Rutschen/Blockieren (Gleiten) der Räder kommt. Ob ein Antriebs- oder Bremsschlupf vorliegt, ist nach dieser Definition am Vorzeichen des Schlupfs zu erkennen (Quelle: Wikipedia).

Das Dokument EP 2 110 289 A2 offenbart ein Startsteuersystem für ein Hybridfahrzeug bei optimierter Traktionskontrolle. Dieses Dokument offenbart offenbart ein Verfahren zum Durchführen eines Regelvorgangs für einen hybridisierten Antriebsstrangs eines Kraftfahrzeuges auf ein Zielmoment, wobei der Antriebsstrang aufweist: ein automatisiertes Stufengetriebe mit einer Eingangswelle und einer Ausgangswelle, wobei die Ausgangswelle mit mindestens einem Antriebsrad des Kraftfahrzeugs verbunden ist; einen Verbrennungsmotor zum Erzeugen eines Antriebmoments; eine Trennkupplung, die den Verbrennungsmotor lösbar zur Übertragung des Antriebsmoments an das Stufengetriebe koppelt; eine Elektromaschine zur Erzeugung eines Zusatzmoments, das zusätzlich zum Antriebsmoment an die Antriebsräder koppelbar ist; eine Motorsteuerung, die das Antriebsmoment des Verbrennungsmotors regelt; eine Elektromaschinensteuerung zur Regelung des Zusatzmoments; wobei das Verfahren die folgenden Schritte aufweist: Ermitteln einer Zielkenngröße für den Verbrennungsmotor auf Basis des festgelegten Zielmoments; Einstellen des Verbrennungsmotors auf die Zielkenngröße; Ermitteln einer Steuergröße für die Elektromaschine.

J Das Dokument US 2009/0240416 A1 offenbart ein Traktionssteuersystem unter Verwendung eines Trägheitssensors für eine adaptive Motordrosselsteuerung.

Es sind verschiedene Methoden bekannt, einen Rennstart zu regeln. Bei einer ersten Methode erfolgt ein Eingriff durch ein Bremssystem. Bei einer zweiten Methode wird eine Leistung eines Verbrennungsmotors reduziert. Bei einer dritten Methode wird ein zu übertragendes Moment mittels einer Trennkupplung angepasst.

Bei der ersten Methode (Eingriff durch das Bremssystem) muss das Kraftfahrzeug mit einem entsprechenden Bremssystem ausgerüstet sein. Ein Steuergerät wirkt auf das Bremssystem ein, um ein möglichst hohes Moment auf die Antriebsräder zu übertragen. Wenn die Gefahr besteht, dass zu viel Leistung auf die Antriebsräder übertragen wird, wird das Bremssystem aktiviert. Die vom Verbrennungsmotor erzeugte Energie wird dabei in Wärmeenergie im Bremssystem umgewandelt und somit vernichtet. Die erste Methode ist hinsichtlich der Energie sehr ineffizient.

Bei der zweiten Methode (Reduktion bzw. Regelung der Leistung des Verbrennungsmotors) wirkt eine Motorsteuerung auf den Verbrennungsmotor ein, um die Eingangsleistung zu regeln. Dieses Regelsystem ist träge und weist eine große Totzeit auf, weil der Schlupf bzw. die Traktion der Antriebsräder keinen festen Wert hat, sondern permanent hochdynamisch geregelt werden muss. Diese Dynamik kann mit der Regelung des Verbrennungsmotors nicht erzielt werden.

Bei der dritten Methode (Kupplungsregelung) wird die vom Verbrennungsmotor erzeugte Energie wiederum in Wärmeenergie umgewandelt, indem die Trennkupplung mit Schlupf betrieben wird. Diese Vorgehensweise ist wiederum sehr ineffizient hinsichtlich der Energie. Die Trennkupplung wird besonders thermisch stark belastet. Die Lebensdauer der Trennkupplung wird beim Rennstart reduziert. Der Rennstart kann nur begrenzt oft durchgeführt bzw. wiederholt werden.

Es ist daher eine Aufgabe der vorliegenden Erfindung, ein maximal mögliches Antriebsmoment schlupffrei an die Antriebsräder zu übertragen, ohne unnötig Energie zu vernichten und ohne die Lebensdauer beteiligter Komponenten zu verkürzen. Außerdem ist eine hohe Regelgüte und eine hohe Regeldynamik wünschenswert.

Diese Aufgabe wird gelöst durch ein Verfahren zum Durchführen eines Regelvorgangs für einen hybridisierten Antriebsstrangs eines Kraftfahrzeug auf ein, vorzugsweise maximal übertragbares, Zielmoment, wobei der Antriebsstrang aufweist: ein automatisiertes Stufengetriebe mit einer Eingangswelle und einer Ausgangswelle, wobei die Ausgangswelle mit mindestens einem Antriebsrad des Kraftfahrzeugs verbunden ist; einen Verbrennungsmotor zum Erzeugen eines Antriebmoments; eine Trennkupplung, die den Verbrennungsmotor lösbar zur Übertragung des Antriebsmoments an das Stufengetriebe koppelt; eine Elektromaschine zur Erzeugung eines Zusatzmoments, das zusätzlich zum Antriebsmoment an die Antriebsräder koppelbar ist; eine Motorsteuerung, die das Antriebsmoment des Verbrennungsmotors regelt; eine Elektromaschinensteuerung zur Regelung des Zusatzmoments; mindestens einen Sensor zur Erfassung einer Größe, aus der ein tatsächlich von der Ausgangswelle an die Antriebsräder übertragenes Ausgangsmoment ermittelbar ist, wobei die Elektromaschinensteuerung das Zusatzmoment als Funktion eines ermittelten Ausgangsmoments regelt; und eine Steuerung, die angepasst ist, das tatsächlich übertragene Ausgangsmoment mittels Berechnung aus der erfassten Größe zu ermitteln; wobei das Verfahren die folgenden Schritte aufweist: Definieren des Zielmoments, bei dem die Antriebsräder noch schlupffrei angetrieben werden; Ermitteln einer Zielkenngröße für den Verbrennungsmotor auf Basis des festgelegten Zielmoments; Einstellen des Verbrennungsmotors auf die Zielkenngröße; Erfassen der Größe zur Ermittlung des Ausgangsmoments; Ermitteln des tatsächlich von der Ausgangswelle übertragenen Ausgangsmoments auf Basis der erfassten Größe; Ermitteln einer Regelgröße für die Elektromaschine auf Basis des ermittelten Ausgangsmoments derart, dass zu jedem Zeitpunkt eines Regelvorgangs eine Momentensumme aus dem Zusatzmoment und dem er-mittelten Ausgangsmoment im Wesentlichen gleich dem Zielmoment ist; und Regeln der Elektromaschine auf die Regelgröße und Koppeln der Elektromaschine an die Ausgangswelle des Getriebes.

Die vorliegende Erfindung setzt einen hybridisierten Antriebsstrang mit einem Verbrennungsmotor und einer Elektromaschine ein. Der Verbrennungsmotor wird als, vorzugsweise primäre, Quelle für das Antriebsmoment genutzt. Die Elektromaschine wird als hochdynamischer Regler für ein Zusatzmoment eingesetzt, so dass eine Summe aus dem Antriebsmoment (inklusive entsprechender Übersetzung durch das Getriebe) und dem Zusatzmoment (ggf. ebenfalls inklusive entsprechender Übersetzung) einem idealen Moment entspricht, wobei das ideale Moment ein maximal auf die Antriebsräder schlupffrei übertragbares Moment ist. Ein Summenpunkt der Momente des Verbrennungsmotors und der Elektromaschine befinden sich dann im Getriebe. Regeleingriffe werden durch die Elektromaschine umgesetzt. Bei einem drohenden Radabriss stellt die Elektromaschine ein Generatormoment bereit, so dass ein Summenmoment am Antriebsrad einer maximalen Traktion entspricht. Durch den Generatorbetrieb kann gleichzeitig eine Batterie geladen werden. Umgekehrt kann während einer anfänglichen Phase durch die Elektromaschine ein zusätzliches (kummulatives) Moment bereitgestellt werden (Boostbetrieb).

Die vorliegende Erfindung kann auch bei einem Rang-Extender oder Seriell-Hybrid eingesetzt werden, wobei der Verbrennungsmotor eine verhältnismäßig kleine Leistung hat, welche im Allgemeinen nicht für einen reinen Verbrennungsmotorbetrieb ausreicht. Bei solch einem Antrieb ist die Elektromaschine die "primäre" Quelle bzw. größere Leistungsquelle. Der Verbrennungsmotor dient in diesem Fall nur zur Bereitstellung einer Grund- bzw. Sockelleistung. Ein maximal übertragbares Radmoment wird erst durch die Elektromaschine erreicht. Dennoch kann eine Rennstartregelung über die Elektromaschine erfolgen. Lediglich ein Kräfteverhältnis zwischen Verbrennungsmotor und Eletromaschine verschiebt sich im Antriebsstrang.

Vorzugsweise entspricht das Zielmoment einer maximal möglichen Traktion an den Antriebsrädern.

Dies kann ein fest vorgegebener Wert sein. Der Wert kann aber auch variieren, z.B. wenn sich ein Zustand einer Fahrbahn ändert (Nässe, Eis, höhere Haftreibung, etc.).

Die Regelgröße wird insbesondere durch das Zusatzmoment repräsentiert.

Das Zusatzmoment wird gegen das übertragene Antriebsmoment "verrampt", wie es unten noch näher erläutert werden wird. Das Zusatzmoment eilt dem Betriebsmoment nach. Eine Momentensumme aus dem Zusatzmoment und dem Antriebsmoment entspricht dem Zielmoment. Es versteht sich, dass das Zusatzmoment nicht unmittelbar gemessen werden kann. Deshalb werden äquivalente Größen, wie z. B. Drehzahlen oder Beschleunigungen gemessen, aus denen wiederum auf das an den Antriebsrädern anliegende Moment zurückgeschlossen werden kann, um den Abgleich mit dem angestrebten Moment durchzuführen.

Ferner ist es von Vorteil, wenn die Zielkenngröße eine Maximaldrehzahl oder eine maximale Leistung des Verbrennungsmotors ist.

Wenn der Verbrennungsmotor auf eine maximale Leistung bzw. seine maximale Drehzahl, vorzugsweise mittels der Motorsteuerung, eingestellt wird, kann überschüssige Antriebsenergie in elektrische Energie umgewandelt werden, indem die Elektromaschine im Generatorbetrieb betrieben wird. Hinsichtlich der Energieausnutzung stellt dies ein äußerst effizientes Verfahren dar. Energie wird nahezu nicht vernichtet.

Im Falle eines Rennstarts wird der Verbrennungsmotor auf die Zielkenngröße (z.B. Motordrehzahl oder Motorleistung) eingestellt, bevor die Trennkupplung geschlossen wird.

In diesem Fall wird das Fahrzeug maximal aus dem Stand beschleunigt.

Außerdem ist es von Vorteil, wenn das Stufengetriebe ein Doppelkupplungsgetriebe mit einem ersten und einem zweiten Teilgetriebe ist, wobei das Antriebsmoment an eines der Teilgetriebe gekoppelt wird und wobei das Zusatzmoment an das andere Teilgetriebe gekoppelt wird.

Vorzugsweise erfolgt die Regelung derart, dass ein Schlupf an den Antriebsrädern Null ist bzw. wird.

Insbesondere wird der Schlupf anhand einer Beschleunigung des Kraftfahrzeugs und einer Getriebedrehzahl oder anhand der Beschleunigung und einer Drehzahl der Elektromaschine ermittelt.

In diesem Fall werden relativ wenige Sensoren benötigt, um den Schlupf an den Antriebsrädern zu bestimmen. Diese Sensoren liegen in handelsüblichen Antriebssträngen oft bereits vor, so dass keine zusätzlichen Sensoren verbaut werden müssen.

Ferner wird die vorliegende Aufgabe durch eine Steuereinrichtung zum Durchführen eines erfindungsgemäßen Verfahrens gelöst, wobei die Steuereinrichtung angepasst ist, in einen Antriebsstrang integriert zu werden, der aufweist: ein automatisiertes Stufengetriebe mit einer Eingangswelle und einer Ausgangswelle, wobei die Ausgangswelle mit mindestens einem Antriebsrad des Kraftfahrzeugs (12) verbunden ist; einen Verbrennungsmotor zum Erzeugen eines Antriebmoments; eine Trennkupplung, die den Verbrennungsmotor lösbar zur Übertragung des Antriebsmoments an das Stufengetriebe koppelt; eine Elektromaschine zur Erzeugung eines Zusatzmoments, das zusätzlich zum Antriebsmoment an die Antriebsräder koppelbar ist; eine Motorsteuerung, die das Antriebsmoment des Verbrennungsmotors regelt; eine Elektromaschinensteuerung zur Regelung des Zusatzmoments; mindestens einen Sensor zur Erfassung einer Größe, aus der ein tatsächlich von der Ausgangswelle an die Antriebsräder übertragenes Ausgangsmoment ermittelbar ist, wobei die Elektromaschinen-steuerung das Zusatzmoment als Funktion eines ermittelten Ausgangs-moments regelt; und eine Steuerung, die angepasst ist, das tatsächlich übertragene Ausgangsmoment mittels Berechnung aus der erfassten Größe zu ermitteln.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1     ein Blockdiagramm eines hybridisierten Antriebsstrangs mit einem einfachen Stufengetriebe;

Fig. 2     ein Blockdiagramm eines hybridisierten Antriebsstrangs mit einem Doppelkupplungsgetriebe;

Fig. 3     ein Drehzahl-Zeit-Diagramm sowie ein Drehmoment-Zeit-Diagramm während eines Rennstarts und während einer späteren Phase bei sich ändernder Traktion;

Fig. 4     eine vergrößerte Darstellung der Momente der Fig. 3 während einer dritten Phase des Rennstarts; und

Fig. 5     ein Flussdiagramm zu einem Verfahren gemäß der Erfindung.

Bei automatisierten Getrieben für Kraftfahrzeuge werden verschiedene Komponenten, wie z.B. Motor und Getriebe, üblicherweise von unterschiedlichen Steuermodulen angesteuert, die auch in Form einer zentralen Steuereinrichtung implementiert sein können. Die vorliegende Erfindung kann in jedem Steuermodul implementiert werden.

Doppelkupplungsgetriebe im Besonderem benötigen eine entsprechende elektronische Steuerung, um die komplexen und diffizilen Schaltungsvorgänge in zwei parallelen Teilgetrieben (Zweigen des Doppelkupplungsgetriebes), denen jeweils eine eigene Reibkupplung (trocken- oder nasslaufend) zugeordnet ist, gewährleisten zu können. Eingangsglieder der Reibkupplungen sind dort mit einer Antriebseinheit verbunden, wie z.B. einem Verbrennungsmotor. Die Antriebseinheit kann jedoch auch ein Elektromotor oder eine Hybridantriebseinheit sein. Die vorliegende Erfindung kommt bei einer Hybridantriebseinheit bzw. einem hybridisierten Antriebsstrang zum Einsatz, der sowohl einen Verbrennungsmotor als auch eine Elektromaschine aufweist. Dem einen Teilgetriebe sind ungerade Gangstufen (1, 3, 5, ...) zugeordnet. Dem anderen Teilgetriebe sind die geraden Gangstufen (2, 4, 6, ...) zugeordnet. Eine Übertragung einer Antriebsleistung bzw. eines Antriebsmoments von der Antriebseinheit auf angetriebene Räder des Kraftfahrzeugs erfolgt generell über eines der zwei Teilgetriebe. In dem jeweils nicht aktiven (inaktiven) Teilgetriebe ist in der Regel eine Gangstufe vorgewählt. Ein Gangwechsel aus dem Start- bzw. Quellgang des aktiven Teilgetriebes in den Zielgang des nicht aktiven Teilgetriebes kann dann durch Überschneiden der Betätigung der eingangsseitigen Reibkupplungen erfolgen. Diese überschneidende Betätigung kann dabei so ausgeführt werden, dass keine Zugkraftunterbrechung während des Gangwechsels auftritt.

Das dazu erforderliche Ansteuern der Reibkupplungen und das Ein- und Auslegen von Gängen bzw. Gangstufen erfolgt aufgrund der Komplexität des Vorgangs automatisiert, und zwar mittels einer übergeordneten Steuereinheit.

Diese Steuereinheit wählt das über die jeweiligen Reibkupplungen zu übertragende Drehmoment, z.B. in Form einer Motorsteuerung und die in den jeweiligen Teilgetrieben eingestellten Übersetzungen in Form einer Kupplungs- und Getriebesteuerung derart, dass diese an die aktuelle Fahrsituation (Geschwindigkeit des Fahrzeugs, Schubbetrieb, etc.) angepasst sind.

Während eines Schaltvorgangs kontrolliert das Motorsteuerungsmodul die Drehzahl bzw. das Drehmoment (tq) des Motors derart, dass ein zugkraftunterbrechungsfreier Gangwechsel möglich ist, während das Getriebesteuermodul Synchronisierungseinrichtungen der Gangstufen öffnet und/oder schließt, d.h. z.B. einen Quellgang auslegt und einen Zielgang danach einlegt. Die Steuermodule kommunizieren dabei über eine Datenbusverbindung, wie z.B. den CAN-(Controller Area Network-)Bus. Das Getriebesteuermodul kontrolliert während eines Gangwechsels üblicherweise das Motorsteuermodul.

Beim CAN-Bus handelt es sich um ein asynchrones, serielles Bussystem, das für die Vernetzung von Steuergeräten in Automobilen entwickelt wurde. Der CAN-Bus arbeitet nach dem CSMA/CR-(Carrier Sense Multiple Access/Collision Resolution-)Verfahren. Ein CAN-Netzwerk wird üblicherweise als Linienstruktur aufgebaut. Stichleitungen sind eingeschränktem Umfang zulässig. Des Weiteren sind auch ringförmige Busse sowie sternförmige Busse (z.B. Zentralverriegelung) möglich.

Die vorliegende Erfindung kommt sowohl bei normalen Getrieben als auch bei Doppelkupplungsgetrieben zum Einsatz.

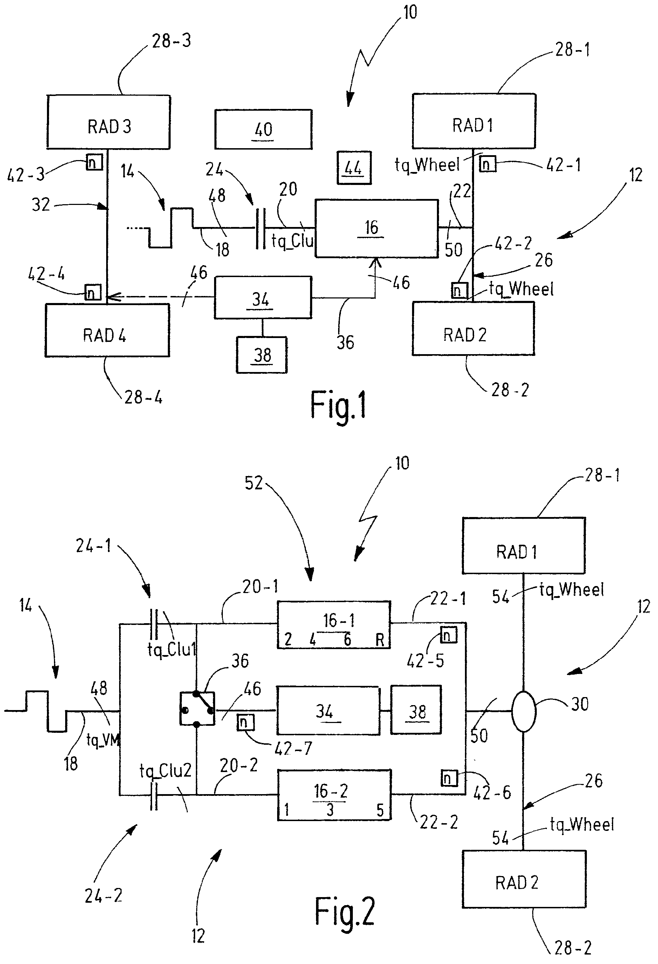

Nachfolgend werden die Fig. 1 und 2 beschrieben werden. Die Fig. 1 zeigt einen Antriebsstrang 10 mit einem einfachen Stufengetriebe 16. Fig. 2 zeigt einen Antriebsstrang 10 mit einem Doppelkupplungsgetriebe 52.

Bezug nehmend auf Fig. 1 ist ein einfacher Antriebsstrang 10 eines Kraftfahrzeugs 12 gezeigt. Der Antriebsstrang 10 weist einen Verbrennungsmotor 14 sowie ein (einfaches) automatisiertes Stufengetriebe 16 auf. Eine Abtriebswelle 18 des Verbrennungsmotors 14 ist an eine Eingangswelle 20 des Stufengetriebes 16 koppelbar. Das Stufengetriebe 16 weist ferner eine Ausgangswelle 22 auf. Die Eingangswelle 20 des Stufengetriebes 16 ist über eine Trennkupplung 24 mit der Abtriebswelle 18 des Verbrennungsmotors 14 verbindbar. Die Ausgangswelle 22 des Stufengetriebes 16 ist mit einer ersten Achse bzw. Antriebsachse 26 verbunden, die wiederum mit einem ersten Rad 28-1 und einem zweiten Rad 28-2 verbunden ist. Es versteht sich, dass die erste Achse 26 auch nur mit einem Rad 28 (z.B. bei einem Motorrad) verbunden sein kann.

Das Kraftfahrzeug 12 der Fig. 1 weist eine zweite Achse 32 auf, die mit einem dritten Rad 28-3 und einem vierten Rad 28-4 verbunden ist. Im Beispiel der Fig. 1 ist die erste Achse 26 angetrieben und die zweite Achse 32 ist nicht angetrieben.

Ferner weist der Antriebsstrang 10 der Fig. 1 eine Elektromaschine (EM) 34 auf, die über eine EM-Anbindung (schaltbar) an das Stufengetriebe 16 gekoppelt ist. Die Elektromaschine 34 empfängt ihre Steuersignale, z.B. von einer Elektromaschinensteuerung 38. Der Verbrennungsmotor 14 erhält seine Steuersignale von einer Steuereinrichtung 40, die wiederum eine Motorsteuerung repräsentieren kann. Die EM-Steuerung 38 und die Steuerung 40 können datentechnisch miteinander verbunden sein (nicht dargestellt). Die Steuerung 40 und die EM-Steuerung 38 können datentechnisch wiederum mit einem oder mehreren Sensoren 42 verbunden sein. Derartige Verbindungen sind in der Fig. 1 nicht gezeigt.

In der Fig. 1 sind ein erster Drehzahlsensor 42-1 und ein zweiter Drehzahlsensor 42-2 gezeigt, die eine Drehzahl (Umdrehung/Minute) des ersten (Antriebs-)Rads 28-1 und des zweiten (Antriebs-)Rads 2 erfassen und mit zumindest einer der Steuerungen 38 und 40 kommunizieren.

Des Weiteren kann ein dritter Drehzahlsensor 42-3 und ein vierter Drehzahlsensor 42-4 vorgesehen sein, um die Drehzahlen des dritten Rads 28-3 und des vierten Rads 28-4 zu erfassen und diese an zumindest eine der Steuerungen 38 und 40 zu liefern.

Ergänzend oder alternativ können weitere Sensoren 42-5 bis 42-7 vorgesehen sein, die die Drehzahlen der Wellen 20 und 22 erfassen. Derartige Sensoren 42-5 bis 42-7 sind exemplarisch in der Fig. 2 gezeigt, können aber auch Teil des Antriebsstrangs 10 der Fig. 1 sein. Diese Sensoren 42-5 bis 42-7 stehen wiederum mit zumindest einer der Steuerungen 38 und 40 datentechnisch in Verbindung.

Der Antriebsstrang 10 der Fig. 1 kann ferner einen Beschleunigungssensor 44 aufweisen, der wiederum zumindest mit einer der Steuerungen 38 und 40 datentechnisch verbunden ist. Mit dem Beschleunigungssensor 44 kann eine Längsbeschleunigung des Kraftfahrzeugs 12 erfasst werden. Mittels den Messsignalen der Sensoren 42 und/oder 44 lässt sich ein Schlupf an den Antriebsrädern 28-1 und 28-2 berechnen. Jede der Steuerungen 38 und/oder 40 kann ausgebildet sein, und den Schlupf basierend auf den Messungen der Sensoren 42 und/oder 44 zu ermitteln. Die Steuerungen 38 und 40 sind mit einer entsprechenden Software ausgestattet, um dazu erforderliche Berechnungen durchzuführen. Weiter unten wird noch erläutert werden, welche Größen bei der Bestimmung des Schlupfs eine Rolle spielen können.

In der Fig. 1 überträgt die Elektromaschine 34 auf direktem Wege (Dreh-)Moment an die erste Achse 26. Dieses Moment wird nachfolgend auch als Zusatzmoment 46 bezeichnet werden. Die Abtriebswelle 18 des Verbrennungsmotors 14 überträgt ein Antriebsmoment 48 an die Eingangswelle 20 des (Stufen-)Getriebes 16, wenn die Trennkupplung 24 geschlossen ist. Die Ausgangswelle 22 des Getriebes 16 überträgt ein, entsprechend übersetztes, Ausgangsmoment 50 an die Antriebsachse 26.

Die hier beschriebene "Rennstart-Regelung" kann lediglich auf eine jeweilige Achse angewendet werden. Wenn mehrere Achsen angetrieben werden (z.B. nur durch eine Elektromaschine), dann ist jede Achse unabhängig zu regeln, da der Rennstart eine Haftung bzw einen Schlupf am Rad regelt. Somit ist das am jeweiligen Rad bzw. an der jeweiligen Achse anliegende Moment entscheidend dafür, ob ein Schlupf entsteht. Jede Antriebsachse ist über ihre jeweiligen Antriebsaggregate zu regeln.

Bezug nehmend auf Fig. 2 ist ein Antriebsstrang 10 mit einem Doppelkupplungsgetriebe 52 gezeigt, welches ein erstes Teilgetriebe 16-1 und ein zweites Teilgetriebe 16-2 aufweist. Ein Aufbau des Antriebsstrangs 10 der Fig. 2 entspricht allgemein einem Aufbau des Antriebsstrangs 10 der Fig. 1. Nachfolgend wird lediglich auf wesentliche Unterschiede eingegangen.

Jedes der Teilgetriebe 16-1 und 16-2 verfügt über eine Eingangswelle 20-1 bzw. 20-2 sowie über eine Ausgangswelle 22-1 bzw. 22-2. Die Ausgangswellen 22-1 und 22-2 können mit der ersten Achse 26 über ein Differenzial 30 verbunden sein. Jeder der Eingangswellen 20-1 und 20-2 ist jeweils eine eigene Trennkupplung 24-1 bzw. 24-2 zugeordnet, um eine kraftübertragende Verbindung zur Abtriebswelle 18 des Verbrennungsmotors 14 herzustellen. Zwischen der jeweiligen Trennkupplung 24-1 und 24-2 und dem jeweils entsprechend zugeordneten Teilgetriebe 16-1 bzw. 16-2 ist die Elektromaschine 34 über die (schaltbare) EM-Anbindung 36 an die Eingangswelle 20-1, die Eingangswelle 20-2 oder keine der Wellen 20-1 und 20-2 koppelbar. In der Fig. 2 ist ein Zustand gezeigt, in welchem die Elektromaschine 34 an die erste Eingangswelle 20-1 gekoppelt ist. Die erste Trennkupplung 24-1 ist geöffnet, wohingegen die zweite Trennkupplung 24-2 geschlossen ist, um den Verbrennungsmotor 14 mit den Antriebsrädern 28-1 und 28-2 über das zweite Teilgetriebe 16-2 zu verbinden.

Auch wenn die Sensoren 42-1 bis 42-4 in der Fig. 2 nicht gezeigt sind, versteht es sich, dass einer oder mehrere dieser Sensoren dennoch vorgesehen sein können. Die Räder 28-3 und 28-4 sind lediglich zur Vereinfachung der Darstellung nicht gezeigt. Die Elektromaschine 34 ist vorzugsweise entlang einer (hier nicht gezeigten) Längsachse des Kraftfahrzeugs 12 angeordnet, um eine Lage eines Schwerpunkts des Kraftfahrzeugs 12 so wenig wie möglich zu beeinflussen. Die Lage des Schwerpunkts kann Einfluss auf den Schlupf haben.

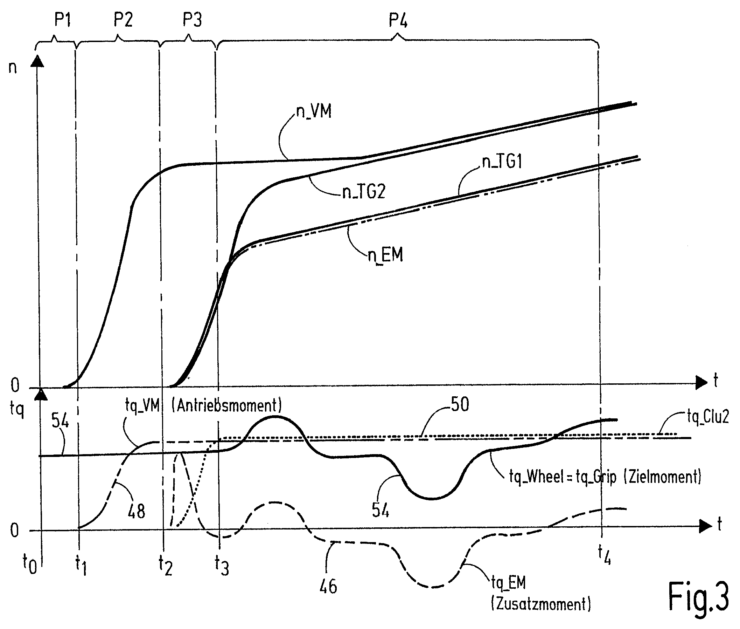

Unter Bezugnahme auf Fig. 3 wird nachfolgend ein Regelvorgang exemplarisch am Beispiel des Antriebsstrangs 10 der Fig. 2 für einen Rennstart erläutert, bei dem das Kraftfahrzeug 12 aus dem Stand maximal schlupffrei beschleunigt wird. Beim Rennstart treibt der Verbrennungsmotor 14 die Räder 28-1 und 28-2 über das zweite Teilgetriebe 16-2 an, dem die Gänge 1, 3 und 5 zugeordnet sind. Dem ersten Teilgetriebe 16-1 sind in diesem Fall die Gänge 2, 4 und 6 sowie der Rückwärtsgang R zugeordnet. Die Elektromaschine 34 ist über die EM-Anbindung 36 mit dem ersten Teilgetriebe 16-1 auf einer Sekundärseite (d.h. bei dem nicht angetriebenen Teilgetriebe) der Doppelkupplung verbunden, z.B. mit dem Gang 2 des Teilgetriebes 16-1. Somit befindet sich eine Momentensumme des Verbrennungsmotors 14 und der Elektromaschine 34 im Doppelkupplungsgetriebe 52.

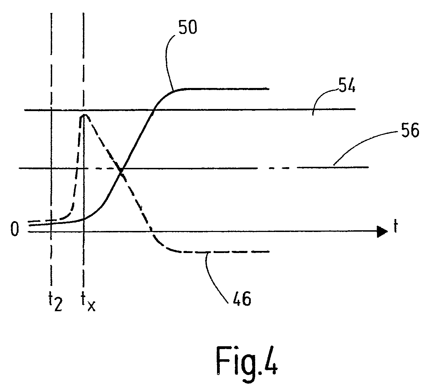

Regeleingriffe werden durch die Elektromaschine 34 umgesetzt. Exemplarisch bekommt die Elektromaschine 34 ihre Regelbefehle von der EM-Steuerung 38, die eine entsprechende Regelgröße bestimmt, insbesondere berechnet, wie es nachfolgend noch näher erläutert werden wird. Es versteht sich, dass auch die Steuerung 40 entsprechende Berechnungen vornehmen und an die EM-Steuerung 38 liefern könnte. Wenn z.B. ein Radabriss droht, weil ein an den Antriebsrädern 28-1 und 28-2 anliegendes Moment zu groß ist, so dass eine Radhaftung abreißt und die Räder 28-1 und 28-2 durchdrehen, stellt die Elektromaschine 34 ein Generatormoment als Zusatzmoment 46 zur Verfügung, so dass eine wirkende Momentensumme an den Rädern 28-1 und 28-2 einer maximalen Traktion entspricht. Durch den Generatorbetrieb der Elektromaschine 34 wird gleichzeitig elektrische Energie erzeugt, die in einer (nicht dargestellten) Batterie gespeichert werden kann. Selbstverständlich kann die Elektromaschine 34 im Boost-Betrieb unterstützend wirken, indem ein positives Zusatzmoment 46 bereitgestellt wird, bis z.B. der Verbrennungsmotor 14 ein gewünschtes Antriebsmoment 48 zur Verfügung stellt. Dies wird nachfolgend unter Bezugnahme auf Fig. 4 noch näher erläutert werden.

Während des Rennstarts kann der Verbrennungsmotor 14 beispielsweise auf eine maximal mögliche Leistung, d.h. ein maximal mögliches Antriebsmoment 42, geregelt werden. Überschüssiges Moment kann, wie oben erläutert, in diesem Fall von der Elektromaschine 34 aufgenommen und rückgewonnen werden.

Fig. 3 zeigt ein Drehzahl-Zeit-Diagramm sowie ein (Dreh-)Moment-Zeit-Diagramm, die übereinander dargestellt sind und die jeweils in vier Phasen P1-P4 unterteilt sind. Eine erste Phase P1 dauert von t0-t1. Eine zweite Phase P2 dauert von t1-t2. Eine dritte Phase P3 dauert von t2-t3 und eine vierte Phase P4 dauert von t3-t4.

Das oben dargestellte Drehzahl-Zeit-Diagramm zeigt eine Drehzahl n_VM des Verbrennungsmotors 14, eine Drehzahl n_TG1 des ersten Teilgetriebes 16-1, eine Drehzahl n_TG2 des zweiten Teilgetriebes 16-2 sowie eine Drehzahl n_EM der Elektromaschine 34. Es versteht sich, dass hier die Drehzahlen n der Wellen der entsprechenden Komponenten des Antriebsstrangs 10 gemeint sind.

Unterhalb des Drehzahl-Zeit-Diagramms ist das Moment-Zeit-Diagramm mit dem Verlauf des Antriebsmoments 48, das auch mit tq_VM bezeichnet ist, des Ausgangsmoments 50, das auch mit tq_Clu2 bezeichnet ist, eines Zielmoments tq_Wheel bzw. tq_Grip und des Zusatzmoments 46 gezeigt, das auch mit tq_EM bezeichnet ist. Das Zusatzmoment 46 wird von der Elektromaschine 34 bereitgestellt und eilt aufgrund des Regelvorgangs dem Zielmoment, das auch mit dem Bezugszeichen 54 bezeichnet ist, zeitlich leicht nach (Totzeit aufgrund Berechnung des tatsächlich am Rad 28 anliegenden Moments). Ab dem Zeitpunkt t3 verlaufen das Zielmoment 54 und das Zusatzmoment 46 parallel. Eine (Momenten-)Summe aus dem Antriebsmoment 50 und dem Zusatzmoment 46 entspricht im Wesentlichen dem Zielmoment 54. Es entspräche dem Zielmoment identisch, wenn für die Regelung keine Zeit benötigt würde.

Nachfolgend wird der Regelvorgang, für den Fall eines Rennstarts aus dem Stand, gemäß der zeitlichen Sequenz t0 bis t4 wiedergegeben.

In der ersten Phase P1 bekommt die für den Regelvorgang verantwortliche Steuerung, hier das Elektromaschinen-Steuergerät (EM-Steuerung 38) mitgeteilt, dass ein Rennstart gewünscht ist. Dies kann zum Zeitpunkt t0 geschehen, indem der Fahrer des Kraftfahrzeugs 12 z.B. einen Knopf im Cockpit des Kraftfahrzeugs 12 betätigt. Dieser Knopfdruck signalisiert der Steuerung 38, dass ein Rennstart gewünscht ist. Die Steuerung 38 legt das Zielmoment 54 fest, welches üblicherweise immer und hier bis kurz nach dem Zeitpunkt t3 konstant ist. Der von einer Geraden abweichende Verlauf des Zielmoments 54 nach dem Zeitpunkt t3 wird später erläutert werden.

Die Initialisierung des Rennstarts durch den Fahrer hat noch keine Auswirkung auf den Antriebsstrang 10. Zum Zeitpunkt t1 wird der Verbrennungsmotor 14, z.B. durch die Motorsteuerung 40, auf eine maximale Drehzahl n_VM geregelt, die der Verbrennungsmotor 14 während der dritten Phase P3 erreicht, wo die Drehzahl n_VM in eine Gerade übergeht, d.h. konstant wird. Die Motordrehzahl n_VM entspricht einer Zielkenngröße, die auf Basis des Zielmoments 54 ermittelt wurde. Das Zielmoment 54 entspricht hier der maximal möglichen Traktion, die als Wert in einem Speicher der Steuerung 38 oder 40 hinterlegt sein kann. Die Zielkenngröße (n_VM) kann entweder durch Berechnung oder durch Vergleich mit einem (ebenfalls hinterlegten) Kennlinienfeld ermittelt werden.

Zum Zeitpunkt t2 hat der Verbrennungsmotor 14 nahezu seine Zielkenngröße (n_VM) erreicht, so dass der Rennstart ausgelöst werden kann. Zum Zeitpunkt t2 wird die zweite Trennkupplung 24-2 geschlossen. Die punktierte Linie tq_Clu2 steigt dann stetig an, bis die Trennkupplung 24-2 zum Zeitpunkt t3 vollständig geschlossen ist. Während die Trennkupplung 24-2 in der Phase P3 geschlossen wird, wird also immer mehr Antriebsmoment 54 vom Verbrennungsmotor 14 auf die Antriebsräder 28-1 und 28-2 übertragen.

Wie es unten noch näher erläutert werden wird, wird der Schlupf an den Antriebsrädern 28-1 und 28-2 ermittelt und dient als Basis für die Regelung des Zusatzmoments 46. Das Zusatzmoment 46 ist gegen das Ausgangsmoment 50 (tq_Clu2) "verrampt", wie es unter Bezugnahme auf Fig. 4 noch näher erläutert werden wird.

Die Phase P3 des Moment-Zeit-Diagramms der Fig. 3 ist in Fig. 4 in Vergrößerung gezeigt. In der Fig. 4 sind das Zielmoment 54 (als Konstante), das von der Trennkupplung 24-2 übertragene Ausgangsmoment 50 sowie das von der Elektromaschine 34 bereitgestellte Zusatzmoment 46 gezeigt. Ferner ist eine Hilfslinie 56 gezeigt, die parallel zur Zeitachse t orientiert ist. Die Darstellung der Fig. 4 berücksichtigt die unterschiedlichen Übersetzungsverhältnisse des ersten und des zweiten Teilgetriebes 16-1 und 16-2 aus Gründen einer Vereinfachung der Darstellung nicht. Unter der Voraussetzung, dass das Übersetzungsverhältnis gleich ist, lässt sich die oben erwähnte "Verrampung" in Form einer Spiegelung des Ausgangsmoments 50 an der Hilfslinie 56 einfach erklären. Ab einem Zeitpunkt tx lässt sich das Zusatzmoment 46 als Spiegelung des Ausgangsmoments 50 an der Hilfslinie 56 darstellen. Ab dem Zeitpunkt tx entspricht eine Momentensumme des Ausgangsmoments 50 und des Zusatzmoments 46 dem Zielmoment 54. Es versteht sich, dass das Zusatzmoment 46 dem Ausgangsmoment 50, welches durch Berechnung ermittelt wird, zeitlich leicht nacheilt. Das Ausgangsmoment 50 entspricht dem an der Antriebsachse 26 momentan anliegenden Moment.

Der Zeitpunkt tx stellt den Zeitpunkt dar, bei dem die Trennkupplung 24-2 beginnt, das Antriebsmoment 48 des Verbrennungsmotors 14 (vgl. Fig. 2) an das zweite Teilgetriebe 16-2 zu übertragen. Das Zusatzmoment 46 wird so eingestellt, dass es zu diesem Zeitpunkt ein unterstützendes Moment (positives Vorzeichen) bereitstellen kann. Vorzugsweise wird das Zusatzmoment 46 auf einen maximal möglichen Wert (vor-)eingestellt. Die für den Regelungsvorgang verantwortliche Steuerung 38 (und/oder 40) hat Kenntnis vom Zeitpunkt t2, bei dem die Trennkupplung 24-2 anfängt, geschlossen zu werden. Ferner ist der Steuerung 38 bekannt (entsprechender Parameter kann in einem Speicher hinterlegt sein), wie viel Zeit vergeht (tx-t2), bis die Trennkupplung 24-2 tatsächlich das volle Antriebsmoment 48 an das zweite Teilgetriebe 16-2 und somit an die Antriebsachse 26 bzw. die Antriebsräder 28-1 und 28-2 überträgt, und wie ein Verlauf des Ausgangsmoments 50 als Funktion der Zeit während des Schließens der Trennkupplung 24-2 aussieht. Üblicherweise wird also das Kupplungsmoment geregelt. Der Steuerung ist ein Ist-Moment zum jeweiligen Zeitpunkt bekannt. Die Zeit muss nicht als Parameter berücksichtigt werden. Des Weiteren lässt sich einer Verbrennungsmotor-Drehzahl (primäre Seite der Kupplung) und einer Drehzahl der Getriebewelle (sekundäre Seite der Kupplung) feststellen, ob die Kupplung schlupft.

Ab dem Zeitpunkt tx greift die Regelung aktiv ein, indem das Zusatzmoment 46 entsprechend gestellt wird, um die Momentensumme dem Zielmoment 54 anzugleichen.

Zurückkehrend zur Fig. 3 wird nachfolgend insbesondere die vierte Phase P4 betrachtet. Die vierte Phase P4 zeigt eine Situation nachdem die Trennkupplung 24-2 vollständig geschlossen ist und mit einer sich ändernden Haftung, z.B. weil die Fahrbahn nass ist oder die Fahrbahn eine bessere Haftung als zuvor aufweist. Die sich ändernden Haftungsbedingungen spiegeln sich im Verlauf des Zielmoments 54 wider. Nach dem Zeitpunkt t3 steigt das Zielmoment 54 zuerst an und fällt dann stufenförmig auf einen minimalen Wert ab, um dann wieder anzusteigen. Es versteht sich, dass ein derartiger Verlauf des Zielmoments 54 in der Realität kaum eintreten wird. Die Darstellung dient jedoch zur Veranschaulichung des Verlaufs des Zusatzmoments 46, welches sich - aufgrund des konstanten Antriebsmoments 54 bzw. des konstanten Ausgangsmoments 50 - dem Verlauf des Zielmoments 54 anpasst bzw. diesem unmittelbar nachfolgt. Die hier gezeigte Steuerung ist hochdynamisch, weil die Regelung über die Elektromaschine 34 erfolgt. Die Regelung erfolgt also weder über die Kupplung noch über den Motor oder die Bremse, wie es im Stand der Technik vorgeschlagen wurde. Eine durch den Verbrennungsmotor 14 und die Elektromaschine 34 zur Verfügung gestellte Energie wird effizient ausgenutzt. Die Elektromaschine 34 zeigt ein hochdynamisches Regelverhalten. Die Kupplung 24 wird normal beansprucht. Das Bremssystem wird entlastet. Es wird kein besonderes Bremssystem, insbesondere keine besondere Bremsensteuerung, benötigt.

Ferner versteht es sich, dass die oben beschriebene Regelung nicht nur im Fall eines Rennstarts zum Einsatz kommen kann. Die Regelung lässt sich auch bei einer Zughochschaltung oder einer Zugrunterschaltung einsetzen. Während eines Schaltvorgangs (z.B. Gang 1 > Gang 2 > Gang 3) kann das Moment durch die Elektromaschinen-Regelung so geregelt werden, dass die Schalteinflüsse auf den Vortrieb minimiert werden.

Ferner versteht es sich, dass im Falle eines Rennstarts auch andere Gangkombinationen möglich sind. Der Verbrennungsmotor 14 und die Elektromaschine 34 können z.B. beide über den zweiten Gang Momente übertragen. Alternativ kann der Verbrennungsmotor 14 über den dritten Gang und die Elektromaschine 34 über den Gang 2 ein Moment übertragen.

Die oben beschriebene Regelung ist so ausgelegt, dass ein Schlupf an den Antriebsrädern 28 Null sein soll. Der Schlupf kann auf verschiedene Arten bestimmt werden. Zum einen kann ein Drehzahlvergleich zwischen einer angetriebenen Achse und einer nicht angetriebenen Achse durchgeführt werden. Alternativ kann ein Beschleunigungssensor (siehe Sensor 44 in Fig. 1) eingesetzt werden, um eine tatsächliche Beschleunigung zu messen, die wiederum mit einer Beschleunigung verglichen werden kann, die sich aus einer Drehzahl des Getriebes 16 oder aus einer Drehzahl der Elektromaschine 34 ableiten lässt. Ein Gradient dieser Drehzahl entspricht einer Beschleunigung. In diesem Fall erfolgt die Regelung der Elektromaschine 34 auf eine maximal mögliche Fahrzeugbeschleunigung, die dann eine zu dem Zielmoment 54 äquivalente Größe darstellt. Der Drehzahlvergleich kann auf verschiedenen Werten basieren, die z.B. von Drehzahlsensoren 42 an den Rädern, Drehzahlsensoren 42 am Getriebe 16, Drehzahlsensoren 42 an der nicht angetriebenen Achse sowie Drehzahlsensoren 42 an der Elektromaschine 34 geliefert werden.

Nachfolgend werden einige physikalische Zusammenhänge am Beispiel des Rennstarts erläutert, wenn der Rennstart über ein Radmoment TQ_wheel geregelt wird. In diesem Fall geht man exemplarisch davon aus, dass das Antriebsmoment ($TQ_{VM}$) des Verbrennungsmotors 14 konstant ist, weil es von der Motorsteuerung 40 auf einem maximal möglichen Wert gehalten wird. Sollte sich aufgrund einer Fahrzeugbeschleunigung eine Ist-Drehzahl des Verbrennungsmotors 14 so ändern, dass aufgrund seines Wirkungsgrad-Kennfeldes das Antriebsmoment 48 nicht (bzw. nicht mehr) gestellt werden kann, muss eine entsprechende Anpassung des Elektromaschinenmoments ($TQ_{EM}$) 46 erfolgen. Ein Widerstandsmoment TQ_wheel$_{resistance}$, welches an einem (Antriebs-)Rad 28 anliegt, lässt sich nach der nachfolgend wiedergegebenen Gleichung (1) berechnen:

(1)

$$TQ\_wheel_{resistance} = \left[ \left( \frac{air\_density}{2} \; x \; \left( v_{veh} \; x \; \frac{1000}{3600} \right)^2 \; x \; resistance\_air \right) \right.$$

$$\left. + \left( m_{veh} \; x \; gravity \; x \; \sin\left( \arctan\frac{slope}{100} \right) \right) + \left( m_{veh} \; x \; gravity \; x \; kR \right) \right] x \; r_{whl}$$

Die Gleichung (1) sellt nicht nur das reine Widerstandsmoment des Rads dar, sondern beinhaltet auch Widerstandsmomente durch einen Luftwiderstand, eine Hangabtriebskraft und einen Rollwiderstand. Diese "Widerstände" sind in der Gleichung (1) zusammengefasst, da diese einer am Rad anliegenden Antriebskraft entgegenwirken. Physikalisch gesehen ist das Rad nicht der (einzige) Ort der Wirkung (siehe z.B. Luftwiderstand). Die benötigte Antriebsleistung wirkt aber am Rad diesen "Widerständen" entgegen.

Ein maximal auf das oder die Räder 28 übertragbare Moment TQ_wheel$_{max}$ berechnet sich nach der nachfolgenden wiedergegebenen Gleichung (2):

(2)

$$TQ\_wheel_{max} \ x \left( \frac{m_{veh}}{z} \ x \ gravity \ x \ Achslastverteilung \right) x \ \mu \ x \ r_{whl}$$

Ein Gesamtmoment TQ_wheel$_{tot}$ berechnet sich nach der nachfolgend wiedergegebenen Gleichung (3):

(3)

$$TQ\_wheel_{tot} = \left( TQ_{VM} \ x \ i_{VM} \right) + \left( TQ_{EM} \ x \ i_{EM} \right)$$

In den oben wiedergegebenen Gleichungen (1) - (3) bedeutet "air_density" die Luftdichte ([kg/m3]), "V$_{veh}$" eine Fahrzeuggeschwindigkeit ([km/h]), "resistance_air" ein Fahrzeug-Luftwiderstand ([cW-Wert x Luftwiderstandsfläche A]), "m$_{veh}$" ein Fahrzeuggewicht ([kg]), "gravity" die Schwerkraft ([m/s2]), "slope" eine Steigung ([%]), "kR" einen Rollwiderstandsbeiwert, "r$_{whl}$" einen dynamischen Reifenradius ([m]), "Achslastverteilung" eine dynamische Achslastverteilung und μ steht für einen Reifenreibwert. Der Quotient TQ$_{VM}$/TQ$_{EM}$ entspricht einem Ist-Moment zwischen dem Verbrennungsmotor 14 und der Elektromaschine 34. Eine aktuelle Gesamtübersetzung ergibt sich aus dem Quotient i$_{VM}$/i$_{EN}$.

Wenn eine Differenz aus dem Gesamtmoment TQ_wheel$_{tot}$ und dem Radwiderstand TQ_wheel$_{resistance}$ dem maximalen Moment TQ_wheel$_{max}$ entspricht, dann ist der Schlupf Null, d.h. genau eingeregelt. Wenn die Differenz größer als Null ist, wird zu viel Moment übertragen. Es kommt zu Schlupf, so dass das Elektromaschinenmoment reduziert werden muss. Wenn die Differenz kleiner Null ist, wird zu wenig Moment übertragen. Kein Schlupf liegt vor. Das Elektromaschinenmoment muss/kann erhöht werden.

Die oben dargestellte momentenabhängige Regelung kann auch über die Beschleunigung a erfolgen. Wenn gilt:

(4)

$$v_{pwd\_axis} - v_{n\_pwd\_axis} = 0,$$

dann ist der Schlupf genau eingeregelt. Eine Geschwindigkeit v$_{n\_pwd\_axle}$ einer nicht angetriebenen Achse entspricht dann einer Geschwindigkeit v$_{pwd\_axle}$ einer angetriebenen Achse.

Analog gilt für den schlupffreien Fall:

(5)

$$\Delta v_{n\_pwd\_axle} = a_{l\_veh} \ x \ \Delta t = \Delta v_{pwd\_axle} = a_{pwd\_axle} \ x \ \Delta t$$

wobei a$_{pwd\_axle}$ eine Längsbeschleunigung einer angetriebenen Achse, a$_{l'veh}$ eine Längsbeschleunigung des Fahrzeugs, $\Delta$v$_{pwd\_axle}$ eine Geschwindigkeitsänderung der angetriebenen Achse und $\Delta$t ein Zeitintervall angibt. Somit folgt aus:

(6)

$$F_{pwd\_axle} = m_{veh} \ x \ a_{pwd\_axle}$$

dass

(7)

$$a_{pwd\_axle} = \frac{TQ\_wheel_{tot}}{r_{whl}} \ x \ \frac{1}{m_{veh}}$$

Physikalisch gesehen ist zwar das am Rad 28 gestellte Moment im Verhältnis zum tatsächlich übertragenen Moment entscheidend für einen optimalen Vortrieb an einer Haft-Schlupf-Grenze. Als sinnvoll messbare Größe wird bei der Regelung der Erfindung vorzugsweise die Drehzahl bzw. Beschleunigung am Rad 28 relativ zur Beschleunigung des Fahrzeugs 12 betrachtet.

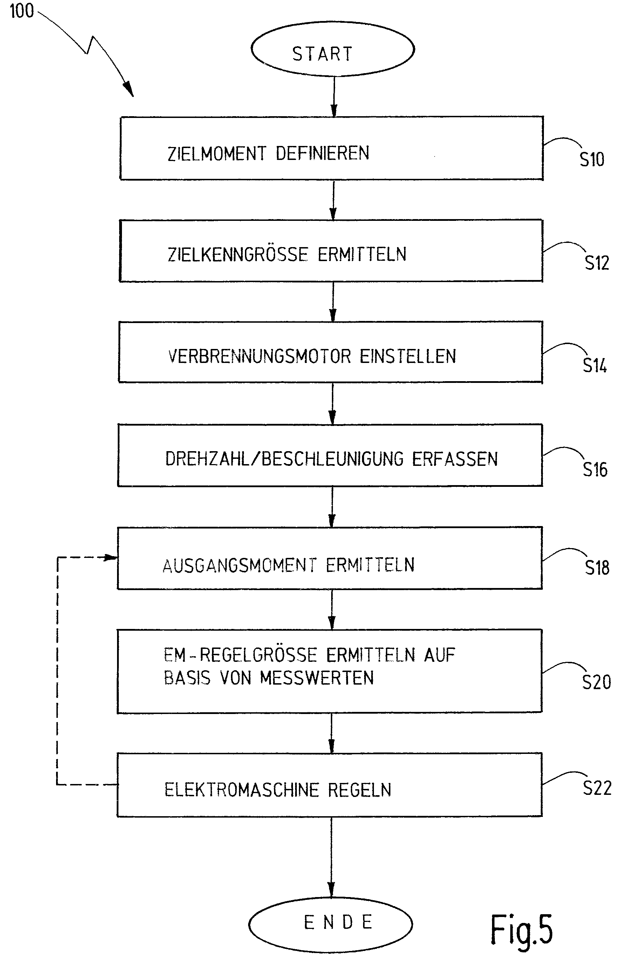

Bezug nehmend auf Fig. 5 ist ein Verfahren 100 zum Durchführen eines Regelvorgangs für einen hybridisierten Antriebsstrang 10 gezeigt. Der hybridisierte Antriebsstrang 10 ist exemplarisch in den Fig. 1 und 2 gezeigt.

In einem ersten Schritt S10 wird das Zielmoment 54 definiert. Wie oben bereits erläutert kann der Fahrer des Kraftfahrzeugs 12 z.B. einen Knopf drücken, um einen Rennstart auszulösen. In diesem Fall wird das Zielmoment 54 durch den Fahrer festgelegt, indem z.B. ein in einem Speicher der EM-Steuerung 38 hinterlegter Wert abgerufen wird. Dieser Wert stellt z.B. ein maximal mögliches Antriebsmoment 50 dar, welches an die Antriebsräder 28 übertragen werden kann, ohne dass es zu Schlupf kommt.

In einem zweiten Schritt S12 wird auf Basis des Zielmoments 54 eine Zielkenngröße ermittelt. Die Ermittlung kann entweder durch Abfrage eines weiteren Werts erfolgen, der dem Zielmoment zugeordnet ist und der ebenfalls in dem Speicher hinterlegt ist. Die Ermittlung kann aber auch z.B. durch Auswerten eines Kennlinienfelds bestimmt werden. Eine Kennlinienfeld-Auswertung (mittels Software in der Steuerung) erfolgt insbesondere, wenn das Zielmoment 54 nicht fest vorgegeben ist, sondern beliebig wählbar bzw. veränderlich ist.

In einem dritten Schritt S14 wird der Verbrennungsmotor 14 auf die im Schritt S12 bestimmte Zielkenngröße eingestellt. Im oben beschriebenen Beispiel wurde der Verbrennungsmotor 14 auf eine (max. mögliche) Drehzahl n_VM eingestellt, die in diesem Fall die Zielkenngröße repräsentiert.

In einem weiteren Schritt S16 wird eine Größe zur Ermittlung des Ausgangsmoments 50 erfasst. Die Erfassung erfolgt mittels einem oder mehreren Sensoren 42 und/oder 44. Die Größe zur Ermittlung des Ausgangsmoments 50 ist vorzugsweise eine Drehzahl n und/oder eine Beschleunigung a.

Anschließend wird in einem Schritt S18 ein tatsächlich von der Ausgangswelle 22 übertragenes Ausgangsmoment 50 auf Basis der erfassten Größe ermittelt, d.h. insbesondere errechnet (siehe oben angegebene Gleichungen).

Anschließend wird in einem Schritt S20 eine Regelgröße für die Elektromaschine 34 auf Basis des ermittelten Ausgangsmoments 50 derart ermittelt, dass zu jedem Zeitpunkt (t>t2) eines Regelvorgangs eine Momentensumme aus dem Zusatzmoment 46 und dem ermittelten Ausgangsmoment 50 im Wesentlichen gleich dem Zielmoment 54 ist.

Schließlich wird in einem Schritt S22 die Elektromaschine 34 auf die Regelgröße eingestellt. Die Elektromaschine 34 ist zu diesem Zeitpunkt auch an die Ausgangswelle 22 des Getriebes 16 - entweder direkt oder indirekt über die Fahrbahn - gekoppelt.

In der Fig. 5 sind die Schritte S22 und S18 mit einer Strichlinie verbunden, um auszudrücken, dass die Regelung permanent erfolgt (Feedback). Das Moment an den Antriebsrädern 28 wird, vorzugsweise (quasi-)kontinuierlich erfasst, um einen hochdynamischen Regelungsvorgang durchführen zu können. Die Regelung selbst ist durch einen schlupffreien Antrieb geprägt, wie es oben unter Bezug auf die Gleichungen (1) bis (7) erläutert wurde.

Bezugszeichenliste:

| 10 | Antriebsstrang |
|----|----|
| 12 | KFZ |
| 14 | Verbrennungsmotor (VM) |
| 16 | Stufengetriebe |
| 18 | Abtriebswelle von 14 |
| 20 | Eingangswelle von 16 |
| 22 | Ausgangswelle von 16 |
| 24 | Trennkupplung |
| 26 | 1. Achse/Antriebsachse |
| 28 | Räder |
| 30 | Differenzial |
| 32 | 2. Achse |
| 34 | Elektromaschine (EM) |
| 36 | EM-Anbindung/Schalter |
| 38 | EM-Steuerung |
| 40 | Steuerung/Motorsteuerung |
| 42 | Drehzahlsensor |
| 44 | Beschleunigungssensor |
| 46 | Zusatzmoment |
| 48 | Antriebsmoment |

| 50 | Ausgangsmoment |
| 52 | DK-Getriebe |
| 54 | Zielmoment |
| 56 | Hilfslinie |
| 100 | Verfahren |

**Patentansprüche**

1.  Verfahren (100) zum Durchführen eines Regeivorgangs für einen hybridisierten Antriebsstrangs (10) eines Kraftfahrzeugs (12) auf ein, vorzugsweise maximal übertragbares, Zielmoment (54), wobei der Antriebsstrang (10) aufweist: ein automatisiertes Stufengetriebe (16) mit einer Eingangswelle (20) und einer Ausgangswelle (22), wobei die Ausgangswelle (22) mit mindestens einem Antriebsrad (28-1, 28-2) des Kraftfahrzeugs (12) verbunden ist; einen Verbrennungsmotor (14; VM) zum Erzeugen eines Antriebmoments (48); eine Trennkupplung (14), die den Verbrennungsmotor (14; VM) lösbar zur Übertragung des Antriebsmoments (48) an das Stufengetriebe (16) koppelt; eine Elektromaschine (34; EM) zur Erzeugung eines Zusatzmoments (46), das zusätzlich zum Antriebsmoment (48) an die Antriebsräder (28-1, 28-2) koppelbar ist; eine Motorsteuerung, die das Antriebsmoment (48) des Verbrennungsmotors (14; VM) regelt; eine Elektromaschinensteuerung (38) zur Regelung des Zusatzmoments (46); mindestens einen Sensor (42, 44) zur Erfassung einer Größe, aus der ein tatsächlich von der Ausgangswelle (22) an die Antriebsräder (28-1, 28-2) übertragenes Ausgangsmoment ermittelbar ist, wobei die Elektromaschinensteuerung (38) das Zusatzmoment (46) als Funktion eines ermittelten Ausgangsmoments (50) regelt; und eine Steuerung (38, 40), die angepasst ist, das tatsächlich übertragene Ausgangsmoment mittels Berechnung aus der erfassten Größe zu ermitteln; wobei das Verfahren die folgenden Schritte aufweist:

    Definieren (S10) des Zielmoments (54), bei dem die Antriebsräder (28-1, 28-2) noch schlupffrei angetrieben werden;
    Ermitteln (S12) einer Zielkenngröße für den Verbrennungsmotor (14; VM) auf Basis des festgelegten Zielmoments (54);
    Einstellen (S14) des Verbrennungsmotors (14; VM) auf die Zielkenngröße; Erfassen (S16) der Größe zur Ermittlung des Ausgangsmoments (50);
    Ermitteln (S18) des tatsächlich von der Ausgangswelle (22) übertragenen Ausgangsmoments (50) auf Basis der erfassten Größe;
    Ermitteln (S20) einer Regelgröße für die Elektromaschine (34; EM) auf Basis des ermittelten Ausgangsmoments (50) derart, dass zu jedem Zeitpunkt (t > t2) eines Regelvorgangs eine Momentensumme aus dem Zusatzmoment (46) und dem ermittelten Ausgangsmoment (50) im Wesentlichen gleich dem Zielmoment (54) ist; und
    Regeln (S22) der Elektromaschine (34) auf die Regelgröße (46) und Koppeln der Elektromaschine (34) an die Ausgangswelle (22) des Getriebes (16).

2.  Verfahren nach Anspruch 1, wobei das Zielmoment (54) einer maximal möglichen Traktion an den Antriebsrädern (28) entspricht.

3.  Verfahren nach Anspruch 1 oder 2, wobei die Regelgröße das Zusatzmoment (46) ist.

4.  Verfahren nach einem der Ansprüche 1 bis 3, wobei die Zielkenngröße eine maximale Drehzahl (n_VM) oder eine maximale Leistung des Verbrennungsmotors (14) ist.

5.  Verfahren nach einem der Ansprüche 1 bis 4, wobei der Verbrennungsmotor (14) auf die Zielkenngröße eingestellt wird, bevor die Trennkupplung (24) geschlossen wird.

6.  Verfahren nach einem der Ansprüche 1 bis 5, wobei das Stufengetriebe (16) ein Doppelkupplungsgetriebe (52) mit einem ersten und einem zweiten Teilgetriebe (16-1, 16-2) ist, wobei das Antriebsmoment (48) an eines der Teilgetriebe (16-2) gekoppelt wird und wobei das Zusatzmoment (46) an das andere Teilgetriebe (16-1) gekoppelt wird.

7.  Verfahren nach einem der Ansprüche 1 bis 6, wobei die Regelung derart erfolgt, dass ein Schlupf an den Antriebsrädern (28-1, 28-2) Null wird.

8.  Verfahren nach Anspruch 7, wobei der Schlupf anhand einer Beschleunigung a des Kraftfahrzeugs (12) und einer Getriebedrehzahl (n_TG1, n_TG2) oder einer Drehzahl (n_EM) der Elektromaschine (34) ermittelt wird.

9. Steuereinrichtung (38; 40), die zum Durchführen eines Verfahrens nach einem der Ansprüche 1 bis 8 eingerichtet ist, wobei die Steuereinrichtung (38; 40) angepasst ist, in einen Antriebsstrang (10) integriert zu werden, der aufweist: ein automatisiertes Stufengetriebe (16) mit einer Eingangswelle (20) und einer Ausgangswelle (22), wobei die Ausgangswelle (22) mit mindestens einem Antriebsrad (28-1, 28-2) des Kraftfahrzeugs (12) verbunden ist; einen Verbrennungsmotor (14; VM) zum Erzeugen eines Antriebmoments (48); eine Trennkupplung (14), die den Verbrennungsmotor (14; VM) lösbar zur Übertragung des Antriebsmoments (48) an das Stufengetriebe (16) koppelt; eine Elektromaschine (34; EM) zur Erzeugung eines Zusatzmoments (46), das zusätzlich zum Antriebsmoment (48) an die Antriebsräder (28-1, 28-2) koppelbar ist; eine Motorsteuerung, die das Antriebsmoment (48) des Verbrennungsmotors (14; VM) regelt; eine Elektromaschinensteuerung (38) zur Regelung des Zusatzmoments (46); mindestens einen Sensor (42, 44) zur Erfassung einer Größe, aus der ein tatsächlich von der Ausgangswelle (22) an die Antriebsräder (28-1, 28-2) übertragenes Ausgangsmoment ermittelbar ist, wobei die Elektromaschinensteuerung (38) das Zusatzmoment (46) als Funktion eines ermittelten Ausgangsmoments (50) regelt; und eine Steuerung (38, 40), die angepasst ist, das tatsächlich übertragene Ausgangsmoment mittels Berechnung aus der erfassten Größe zu ermitteln.

## Claims

1. A method (100) for performing a controlling process of a hybridized drive line (10) of a motor vehicle (12) to a, preferably maximally transmittable, target torque (54), wherein the drive line (10) comprises: an automated stepped transmission (16) having an input shaft (20) and an output shaft (22), wherein the output shaft (22) is connected to at least one driving wheel (28-1, 28-2) of the motor vehicle (12); a combustion engine (14; VM) for generating a driving torque (48); a separating clutch (14) releasably coupling the combustion engine (14; VM) to the stepped transmission (16) for transmitting the driving torque (48); an electric machine (34; EM) for generating an additional torque (46) which is coupleable, additionally to the driving torque (48), to the driving wheels (28-1, 28-2); a motor control for controlling the driving torque (48) of the combustion engine (14; VM); an electric-machine control (38) for controlling the additional torque (46); at least one sensor (42, 44) for detecting a quantity from which an output torque actually transmitted by the output shaft (22) to the driving wheels (28-1, 28-2) can be determined, wherein the electric-machine control (38) controls the additional torque (46) as a function of a determined output torque (50); and a control (38, 40) configured to determine the actually transmitted output torque by means of calculation based on the detected quantity; wherein the method comprises the following steps:

   defining (S10) the target torque (54) at which the driving wheels (28-1, 28-2) can still be driven without slip;
   determining (S12) a target characteristic for the combustion engine (14; VM) on the basis of the determined target torque (54);
   setting (S14) the combustion engine (14; VM) to the target characteristic;
   detecting (S16) the quantity for determining the output torque (50);
   determining (S18) the output torque (50), which is actually transmitted by the output shaft (22), on the basis of the detected quantity;
   determining (S20) a controlling quantity for the electric machine (34; EM) on the basis of the determined output torque (50) such that at any time (t > t2) of a controlling process a sum of torques on the basis of the additional torque (46) and the determined output torque (50) substantially equals the target torque (54); and
   controlling (S22) the electric machine (34) towards the controlling quantity (46), and coupling the electric machine (34) to the output shaft (22) of the transmission (16).

2. The method of claim 1, wherein the target torque (54) corresponds to a traction, which is at maximum possible, at the driving wheels (28).

3. The method of claim 1 or 2, wherein the controlling quantity is the additional torque (46).

4. The method of one of claims 1 to 3, wherein the target characteristic is a maximum number of revolutions (n_VM) or a maximum performance of the combustion engine (14).

5. The method of one of claims 1 to 4, wherein the combustion engine (14) is set to the target characteristic before the separating clutch (24) is closed.

6. The method of one of claims 1 to 5, wherein the stepped transmission (16) is a double-clutch transmission (52) having first and second partial transmissions (16-1, 16-2), wherein the driving torque (48) is coupled to one of the partial transmissions (16-2), and wherein the additional torque (46) is coupled to the other partial transmission (16-1).

7. The method of one of claims 1 to 6, wherein the controlling is performed such that slip at the driving wheels (28-1, 28-2) is zero.

8. The method of claim 7, wherein the slip is determined on the basis of an acceleration a of the motor vehicle (12) and a number of revolutions of the transmission (n_TG1, n_TG2) or a number of revolutions (n_EM) of the electric machine (34).

9. A controlling device (38; 40) configured for performing a method of one of claims 1 to 8, wherein the controlling device (38; 40) is configured to be integrated into a drive line (10) which comprises: an automated stepped transmission (16) having an input shaft (20) and an output shaft (22), wherein the output shaft (22) is connected to at least one driving wheel (28-1, 28-2) of the motor vehicle (12); a combustion engine (14; VM) for generating a driving torque (48); a separating clutch (14) coupling the combustion engine (14; VM) releasably to the stepped transmission (16) for transmitting the driving torque (48); an electric machine (34; EM) for generating an additional torque (46) which can be coupled to the driving wheels (28-1, 28-2) additionally to the driving torque (48); a motor control for controlling the driving torque (48) of the combustion engine (14; VM); an electric-machine control (38) for controlling the additional torque (46); at least one sensor (42, 44) for detecting a quantity which can be determined from the output torque being actually transmitted by the output shaft (22) to the driving wheels (28-1, 28-2), wherein the electric-machine control (38) controls the additional torque (46) as a function of the determined output torque (50); and a control (38, 40) configured to determine the actually transmitted output torque by means of calculation on the basis of the detected quantity.

**Revendications**

1. Procédé (100) permettant d'exécuter une opération de régulation à un couple cible (54), de préférence le couple maximal transmissible, sur le train d'entraînement hybride (10) d'un véhicule automobile (12), le train d'entraînement (10) présentant

   une transmission automatique (16) à plusieurs rapports dotée d'un arbre d'entrée (20) et d'un arbre de sortie (22), l'arbre de sortie (22) étant raccordé à au moins une roue d'entraînement (28-1, 28-2) du véhicule automobile (12), un moteur (14; VM) à combustion interne qui forme un couple d'entraînement (48), un embrayage (14) qui accouple de manière libérable le moteur (14; VM) à combustion interne à la transmission (16) à plusieurs étages pour transférer le couple d'entraînement (48),

   une machine électrique (34; EM) qui forme un couple supplémentaire (46) qui peut être appliqué sur les roues motrices (28-1, 28-2) en plus du couple d'entraînement (48),
   une commande de moteur qui régule le couple d'entraînement (48) du moteur (14; VM) à combustion interne,
   une commande (38) de machine électrique qui régule le couple supplémentaire (46),
   au moins un capteur (42, 44) qui saisit une grandeur à partir de laquelle le couple de sortie transféré effectivement de l'arbre de sortie (22) aux roues motrices (28-1, 28-2) peut être déterminé, la commande (38) de machine électrique régulant le couple supplémentaire (46) en fonction du couple de sortie (50) qui a été déterminé et
   une commande (38, 40) adaptée pour déterminer par calcul à partir des grandeurs saisies le couple de sortie effectivement transféré, le procédé présentant les étapes suivantes :
   définition (S10) du couple cible (54) auquel les roues motrices (28-1, 28-2) peuvent être entraînées sans patinage,
   sur la base du couple cible (54) qui a été défini, détermination (S12) d'une grandeur caractéristique cible pour le moteur (14; VM) à combustion interne,
   réglage (S14) du moteur (14; VM) à combustion interne à la grandeur caractéristique cible,
   saisie (S16) de la grandeur permettant de déterminer le couple de sortie (50),
   sur la base de la grandeur saisie, détermination (S18) du couple de sortie (50) effectivement transféré par l'arbre de sortie (22),
   détermination (S20) d'une grandeur de régulation de la machine électrique (34; EM) sur la base du couple de sortie (50) qui a été déterminé, de telle sorte qu'à chaque instant (t > t2) d'une opération de régulation, la somme des couples formés par le couple supplémentaire (46) et le couple de sortie (50) qui a été déterminé soit essentiellement égale au couple cible (54) et
   régulation (S22) de la machine électrique (34) à la grandeur de régulation (46) et accouplement de la machine électrique (34) à l'arbre de sortie (22) de la transmission (16).

2. Procédé selon la revendication 1, dans lequel le couple cible (54) correspond à la traction maximale possible sur les roues motrices (28).

**3.** Procédé selon les revendications 1 ou 2, dans lequel la grandeur de régulation est le couple supplémentaire (46).

**4.** Procédé selon l'une des revendications 1 à 3, dans lequel la grandeur caractéristique cible est une vitesse de rotation maximale (n_VM) ou la puissance maximale du moteur (14) à combustion interne.

**5.** Procédé selon l'une des revendications 1 à 4, dans lequel le moteur (14) à combustion interne est réglé à la grandeur caractéristique cible avant que l'embrayage (24) soit fermé.

**6.** Procédé selon l'une des revendications 1 à 5, dans lequel la transmission (16) à plusieurs rapports est une transmission (52) à double embrayage présentant une première et une deuxième transmission partielle (16-1, 16-2), le couple d'entraînement (48) étant appliqué sur l'une des transmissions partielles (16-2) et le couple supplémentaire (46) sur l'autre transmission partielle (16-1).

**7.** Procédé selon l'une des revendications 1 à 6, dans lequel la régulation s'effectue de manière à annuler le patinage sur les roues motrices (28-1, 28-2).

**8.** Procédé selon la revendication 7, dans lequel le patinage est déterminé à l'aide de l'accélération a du véhicule automobile (12) et d'une vitesse de rotation (n_TG1, n_TG2) de la transmission ou de la vitesse de rotation (n_EM) du moteur électrique (34).

**9.** Dispositif de commande (38; 40) conçu pour exécuter le procédé selon l'une des revendications 1 à 8, le dispositif de commande (38; 40) étant adapté pour être intégré dans un train d'entraînement (10) qui présente :

une transmission automatique (16) à plusieurs rapports dotée d'un arbre d'entrée (20) et d'un arbre de sortie (22), l'arbre de sortie (22) étant raccordé à au moins une roue d'entraînement (28-1, 28-2) du véhicule automobile (12),
un moteur (14; VM) à combustion interne qui forme un couple d'entraînement (48),
un embrayage (14) qui accouple de manière libérable le moteur (14; VM) à combustion interne à la transmission (16) à plusieurs étages pour transférer le couple d'entraînement (48),
une machine électrique (34; EM) qui forme un couple supplémentaire (46) qui peut être appliqué sur les roues motrices (28-1, 28-2) en plus du couple d'entraînement (48),
une commande de moteur qui régule le couple d'entraînement (48) du moteur (14; VM) à combustion interne,
une commande (38) de machine électrique qui régule le couple supplémentaire (46),
au moins un capteur (42, 44) qui saisit une grandeur à partir de laquelle le couple de sortie transféré effectivement de l'arbre de sortie (22) aux roues motrices (28-1, 28-2) peut être déterminé, la commande (38) de machine électrique régulant le couple supplémentaire (46) en fonction du couple de sortie (50) qui a été déterminé et
une commande (38, 40) adaptée pour déterminer par calcul à partir des grandeurs saisies le couple de sortie effectivement transféré.

Fig.1

Fig.2

Fig.3

Fig.4

Fig.5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2110289 A2

- US 20090240416 A1